# EUROPÄISCHE PATENTSCHRIFT

(11) **EP 0 957 012 B1**
(45) Veröffentlichungstag und Bekanntmachung des Hinweises auf die Patenterteilung: **16.06.2004**
(21) Anmeldenummer: 99890061.7
(22) Anmeldetag: 18.02.1999
(51) Int. Cl.: B60R 21/26, F16K 31/00

(54) **Füllvorrichtung für den Gassack eines Aufprallschutzes**
Filling arrangement for an airbag in a crash protection device
Dispositif de remplissage d'un coussin gonflable dans un dispositif de protection en cas d'accident

(30) Priorität: 20.02.1998 AT 9898 U
(43) Veröffentlichungstag der Anmeldung: 17.11.1999
(73) Patentinhaber: iSi Airbag GmbH, 1217 Wien (AT)
(72) Erfinder: Schäfer, Dietmar, Dipl.-Ing., 1140 Wien (AT); Sattler, Peter, Dipl.-Ing., 18258 Goeldenitz (DE); Jakowski, Klaus, Dipl.-Ing., 18190 Niekrenz (DE)
(74) Vertreter: KLIMENT & HENHAPEL

(56) Entgegenhaltungen:
- EP-A- 0 715 994
- DE-A- 19 513 242
- GB-A- 2 320 557
- US-A- 5 536 040
- US-A- 5 603 525
- "EXTERNAL AUGMENT INFLATOR HAVING A FLYER DISK" RESEARCH DISCLOSURE,GB,INDUSTRIAL OPPORTUNITIES LTD. HAVANT, Nr. 384, 1. April 1996 (1996-04-01), Seiten 232-233, XP000596109 ISSN: 0374-4353

## Beschreibung

Die vorliegende Erfindung bezieht sich auf eine Füllvorrichtung zum Aufblasen von Aufprallschutzkissen nach Anspruch 1.

Solche Füllvorrichtungen kommen zum Beispiel in Airbags für Kraftfahrzeuge zum Einsatz. Dabei ist ein stark komprimiertes Gas in einem Gasspeicher gespeichert. Dieser hat im wesentlichen zylindrische Form und weist mindestens eine Öffnung auf, über die der Gasspeicher gefüllt wurde und über diese Öffnung er wieder entladen wird. Es sind jedoch auch Gasspeicher bekannt, die eine getrennte Füll- und Entladeöffnung aufweisen. Die Entladeöffnung ist jedenfalls in geladenem Zustand mittels eines Verschlußstückes wie z.B. einer Membran verschlossen. Bei Füllvorrichtungen nach dem Stand der Technik ist eine einen Verschlußzerstörmechanismus beinhaltende Hülse so mit dem gefüllten Gasspeicher verbunden, daß dieser der Funktion ensprechend lagerichtig fixiert ist. Die bei der Öffnung des Gasspeichers durch den Druckaufbau in der Hülse auftretende Trennkraft zwischen diesen beiden Komponenten wird beim Einsatz eines autark hergestellten Gasspeichers nach dem Stand der Technik von einer formschlüssigen Verbindung aufgenommen. Eine solche Füllvorrichtung ist aus der gattungsbildenden EP-A-0715 994 bekannt.

Diese formschlüssige Verbindung wird durch Verschraubung, bzw. Sickung oder Prägung der Hülse auf dem entsprechend vorbereiteten Gasspeicher hergestellt.

Zum Auslösezeitpunkt wird der in der Hülse aufgenommene Verschlußzerstörmechanismus (elektrisch, mechanisch, pyrotechnisch) aktiviert, wodurch der Gasspeicherverschluß zerstört wird und das im Gasspeicher unter Druck gespeicherte Gas über Öffnungen in der Hülse in das anschließend an diese Öffnungen angeordnete Aufprallschutzkissen entweichen kann.

Füllvorrichtungen nach dem Stand der Technik, die auf einem autarken Gasspeicher aufbauen, weisen eine unlösbare formschlüssige Verbindung zwischen Gasspeicher und Hülse auf. Dabei wird vor der Befüllung des Gasspeichers in dessen Verbindungsbereich mit der Hülse entweder ein Gewinde, eine Rille oder eine entsprechende Prägung eingebracht. Zur Erreichung von den erforderlichen hohen Trennkräften ist eine sehr genaue Ausbildung der entsprechenden Kontur notwendig. Dies bedingt aufgrund der im Material dadurch auftretenden Spannungsspitzen einen nicht kalkulierbaren Spannungszustand und damit eine signifikante Schwächung des Gasspeichers. Nach dessen Befüllung und spezifischer Prüfung wird dann die Hülse auf dem Gasspeicher montiert. Dies geschieht entweder durch Aufschrauben der Hülse oder durch deren Aufschieben und anschließendem Prägen bzw. Sicken des überlappenden Bereichs in die im Gasspeicher dafür vorgesehene Kontur.

Insbesondere die für das Prägen bzw. Sicken erforderlichen Kräfte stellen in Bezug auf den Spannungszustand eine weitere Beanspruchung des Gasspeichers dar, die aufgrund ihrer Streubreite nur schwer kalkulierbar erscheint.

Da der Gasspeicher jedoch Drücken bis 350 bar standhalten muß und dies über einen Zeitraum von mehr als 15 Jahren, wobei für einen Temperaturbereich zwischen -35°C und 107°C die Betriebstüchtigkeit garantiert sein muß, bedeutet eine formschlüssige Verbindung nach dem Stand der Technik und die damit notwendige Kontur am Gasspeicher einen entsprechend hohen prozeßtechnischen Aufwand und entspricht damit nicht dem Gedanken an ein Robust Design.

Ein weiteres Problem bei Füllvorrichtungen nach dem Stand der Technik stellt die Abdichtung zwischen Gasspeicher und Hülse dar, da die über den Einsatz einer Passung erreicht wird und damit, abhängig von der Toleranzlage, naturgemäß einer Varianz unterliegt.

Ziel der Erfindung ist es, eine Füllvorrichtung für das Aufprallschutzkissen eines Aufprallschutzes vorzusehen, der den hohen Abnahmebedingungen entspricht, die geforderte lange Lebensdauer ohne technologische Umwege problemlos einhält, durch absolute Dichtheit zwischen Gasspeicher und Hülse das Gas nur durch die dafür vorgesehenen Öffnungen in das Aufprallschutzkissen entweichen läßt, sowie schon bei der Produktion die Chancen einer Produktverletzung im Herstellungsprozeß minimiert und eine exakte Positionierung und Abdichtung der Einzelteile mit vergleichsweise großen Toleranzen zuläßt.

Diese Aufgabe wird bei einer Füllvorrichtung der eingangs erwähnten Art durch die Merkmale des Anspruchs 1 erreicht.

Durch die Ausführung einer Schweißverbindung zur Befestigung der Hülse am Gasspeicher werden durch den schmelztechnischen Verbund absolute Gasdichtheit und hohe Trennkräfte zwischen den Komponenten erreicht ohne dabei den Spannungszustand im Gasspeicher negativ zu beeinflussen.

Im Bereich der Schweißstelle kann unter Umständen das Materialgefüge und damit die Materialeigenschaften sogar verbessert werden. Die Tatsache, daß durch die Hülse durchgeschweißt wird bedingt eine zusätzliche Stabilisierung des Verbindungsbereichs, so daß die Verbindungsstelle als Verstärkung des Gasspeichers betrachtet werden kann.

Gemäß Anspruch 2 wird das Ausströmen des Gases während des Schweißvorgangs verhindert, da die Gasspeicherwand nicht durchgeschweißt ist. Als Schweißarten können u.a. Elektronenstrahl-, Laser- und Plasmaschweißung zur Anwendung kommen. Gasspeicher und Hülse, die gemäß späterer Funktion fluchtend ausgerichtet sind, werden im Zuge der Verschweißung um Ihre Rotationsachse gedreht, während ein Laser den schmelztechnischen Verbund zwischen Hülsenwand und Gasspeicherwand herstellt. Als Einstellparameter für die Qualität und Tiefe der Verbindung sind dabei Leistungsdichte, Verfahrgeschwindigkeit sowie, in Abhängigkeit der zu verschweißenden Materialien, der Schweißspalt zu sehen.

Um den ökonomischen Anforderungen an das Produkt Rechnung zu tragen kommen Wandstärken für beide Komponenten von im wesentlichen zwischen 1mm und 2mm zum Einsatz.

Gasspeicher und Hülse können prinzipiell aus jedem schweißbaren Material ausgeführt sein, welches den hohen Anforderungen an Lebensdauer, Druck- und Temperaturbeständigkeit genügt.

Im folgenden wird die Erfindung anhand eines Beispiels und mit Bezug auf die beiliegenden Zeichnungen näher erläutert. Dabei zeigen:
Fig. 1 eine teilweise geschnittene Ansicht einer erfindungsgemäßen Füllvorrichtung, mit einer Detailansicht der Schweißnaht.
Fig. 2 eine Ansicht einer erfindungsgemäßen Füllvorrichtung mit Aufprallschutzkissen und Schnittansicht der Hülse.

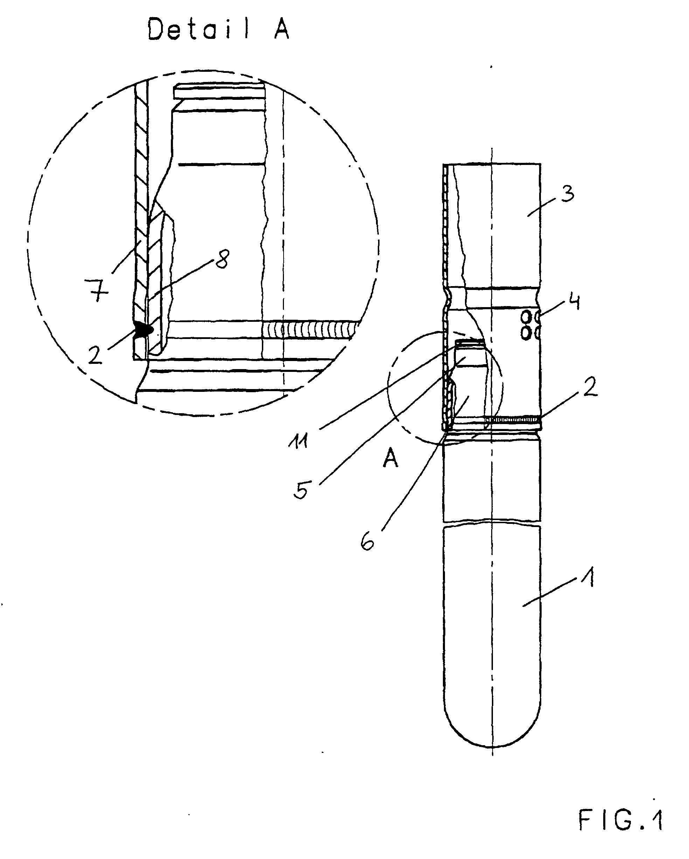

In Fig. 1 ist ein Gasspeicher 1 über eine Schweißnaht 2 mit einer einen Verschlußzerstörmechanismus beinhaltenden Hülse 3 verbunden. Im mittleren Bereich der Hülse 3 sind Öffnungen 4 angebracht. Der Gasspeicher 1 weist an seinem einen Endbereich 6 eine durch ein Verschlußstück 11 verschlossene Öffnung 5 auf. Der Durchmesser dieses Endbereichs 6 ist etwas geringer als der Durchmesser des restlichen Gasspeichers 1 und abgestuft ausgeführt. Die Hülse 3 weist im wesentlichen den selben Durchmesser wie der restliche Gaspeicher 1 auf, wodurch im Endbereich 6 eine Überlappung des Gasspeichers 1 durch die Hülse 3 stattfindet. Im unmittelbaren Bereich der Verschweißung ist die Hülse etwas aufgeweitet ausgeführt, so daß ein kleiner Spalt zwischen Gasspeicher und Hülse entsteht. Detail A der Fig. 1 zeigt die genaue Ausführung der Schweißnaht 2 und Aufweitung der Hülse. Die Hülsenwand 7 weist dabei eine Durchschweißung auf, wogegen die Gasspeicherwand 8 lediglich eine Einschweißung aufweist.

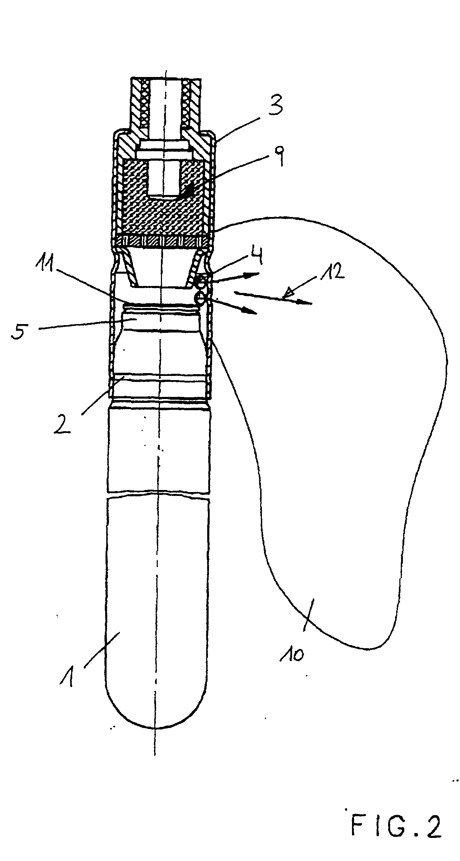

Fig. 2 zeigt zusätzlich die Anordnung eines Verschlußzerstörmechanismus 9 (nicht näher beschrieben) in der Hülse 3, sowie das anschließend an die Öffnungen 4 angeordnete Aufprallschutzkissen 10. Die Pfeile 12 symbolisieren die vorgesehene Ausströmrichtung des Gases in das Aufprallschutzkissen 10.

## Patentansprüche

1. Füllvorrichtung zum Aufblasen von Aufprallschutzkissen, insbesondere in Kraftfahrzeugen, mit einem Gasspeicher (1), der vorzugsweise als eine metallische, im wesentlichen zylinderförmige Kapsel ausgeführt ist und in geladenem Zustand in seinem einen Endbereich (6) eine mit einem Verschluss (11), vorzugsweise einer Membran verschlossene Entladeöffnung (5) aufweist und in diesem Endbereich (6) mit einer einen Verschlusszerstörmechanismus (9) haltenden Hülse (3) **axial** überlappend und fluchtend verbunden ist, welche Öffnungen (4) zum Ausströmen des Gases in das Aufprallschutzkissen (10) aufweist, **dadurch gekennzeichnet, dass** die Hülse (3) in jenem, den Gasspeicher (1) **axial** überlappenden Bereich, an den **vorher befüllten** Gasspeicher (1) über den Umfang angeschweißt ist.

2. Füllvorrichtung nach einem der Ansprüche 1 und 2, **dadurch gekennzeichnet, daß** die Schweißnaht (2) die Hülsenwand (7) durchdringt, die Gasspeicherwand (8) jedoch keine vollständige Durchschweißung aufweist.

## Claims

1. An inflating apparatus for inflating an airbag, especially in motor vehicles, with a gas storage (1) which is preferably arranged as a metallic, substantially cylindrical capsule and comprises in its loaded state and in its one end region (6) a discharging opening (5) which is closed off with a closure (11), preferably a membrane, and is joined in said end region (6) in an axially overlapping and aligned manner with a sleeve (3) which holds a closure destruction mechanism (9) and comprises openings (4) for allowing the gas to flow into the airbag (10), **characterized in that** in the region axially overlapping the gas storage (1) the sleeve (3) is welded over the circumference onto the previously filled gas storage (1).

2. An inflating apparatus as claimed in one of the claims 1 and 2, **characterized in that** although the weld seam (2) penetrates the sleeve wall (7), the gas storage wall (8) does not have any full penetration welding.

## Revendications

1. Dispositif de remplissage pour gonfler un coussin gonflable de protection, notamment dans un véhicule automobile, avec un réservoir de gaz (1) de préférence réalisé sous forme d'enveloppe métallique de forme sensiblement cylindrique qui, dans une de ses zones d'extrémité (6), comporte, quand il est chargé, un orifice de décharge (5) obturé par un organe de fermeture (11), de préférence par une membrane, et est relié dans cette zone d'extrémité (6) à une gaine (3) contenant un mécanisme (9) destiné à détruire l'organe de fermeture de manière à la recouvrir **axialement** en partie et à se trouver en ligne avec elle, ladite gaine comportant des orifices de sortie (4) par lesquels le gaz peut pénétrer dans le coussin gonflable de protection (10), **caractérisé en ce que**, dans la zone dans laquelle la gaine (3) recouvre axialement le réservoir de gaz (1), celle-ci est soudée sur le pourtour au réservoir de gaz (1) **rempli au préalable.**

2. Dispositif de remplissage selon l'une quelconque des revendications 1 et 2, **caractérisé en ce que** le cordon de soudure (2) traverse la paroi (7) de la gaine alors que la paroi (8) du réservoir de gaz ne comporte pas de soudure la traversant complètement de part en part.
